# EUROPEAN PATENT SPECIFICATION

(11) **EP 1 428 700 B1**
(45) Date of publication and mention of the grant of the patent: **18.05.2005**
(21) Application number: 02425772.7
(22) Date of filing: 13.12.2002
(51) Int. Cl.: B60H 1/00

(54) **Air flow treatment assembly for a vehicle comprising a transmission system for remote control of the means for controlling the flow of air**
Vorrichtung zur Behandlung eines Luftstroms in einem Fahrzeug mit einem Übertragungssystem zur Ansteuerung der Mittel zur Steuerung des Luftstroms
Appareil de traîtement d'un flux d'air dans un véhicule comprenant un système de commande à distance des moyens de contrôle du flux d'air

(43) Date of publication of application: 16.06.2004
(73) Proprietor: DENSO THERMAL SYSTEMS S.p.A., 10046 Poirino (Torino) (IT)
(72) Inventor: Aimone, Adelio, 10044 Pianezza (Torino) (IT); Tortorelli, Giovanni, 10023 Chieri (Torino) (IT)
(74) Representative: Marchitelli, Mauro

(56) References cited:
- EP-A- 1 213 165
- US-A- 4 653 386

## Description

The present invention relates to an air-flow-treatment assembly for a vehicle, having the characteristics forming the subject of the preamble of the main claim.

An air-treatment assembly for a vehicle normally comprises a supporting structure, which carries at least one heat exchanger, and control means for controlling the flow of air, for controlling the temperature and/or air-flow distribution. The means for regulating the temperature frequently comprise a valve which regulates the rate of a flow of hot water that traverses a heat exchanger for heating the air flow. The means for regulating mixing, distribution and intake of the flow of air comprise one or more mobile doors, which according to their position vary the direction of air-flow distribution, carry out mixing of the flow of air, or vary the intake position of the flow of air to be treated (intaken from outside recirculating air). The said control means for controlling the flow of air are associated to a transmission system including rigid or flexible transmission members, which connect the control means for controlling the flow of air of the distribution assembly with control knobs or control levers, which are located on the control panel of the vehicle and which can be operated manually by the user.

The transmission system for remote control of the means for controlling the flow of air is frequently provided with a retention device for withholding the means for controlling the flow of air in a plurality of stable positions. In known solutions, the said retention device is usually associated to the knobs of the control panel. In some known solutions, the said retention devices enable a movement to be obtained by snap action of the control knobs and envisage the use of balls associated to springs in compression, which co-operate by snap action with retention seats formed on the control knob or on cylindrical elements fixed to the control knobs.

EP-A-1213165 discloses an assembly according to the preamble of claim 1, including a rotating knob provided on a decorative panel of a controller unit in such a way as to be able to rotate around a shaft center. Three guideholes are provided along the same virtual circle drawn around the shaft center. Sliding knobs are respectively provided in the guide holes in such a manner as to perform a sliding operation. Each sliding knob is connected to a rotatable element having an arm which is movable in a circular groove and which carries a piece of elastic metal cooperating with the walls of the groove.

The object of the present invention is to provide an assembly of an improved type for treating a flow of air, in which the retention device for withholding the means for controlling the flow of air in a plurality of stable positions is made up of a small number of components that can be assembled in a simple and fast way.

According to the present invention, this object is achieved by an assembly having the characteristics forming the subject of the main claim.

The present invention will now be described in detail with reference to the attached drawings, which are provided purely by way of non-limiting example and in which:
- Figure 1 is a schematic perspective view of an air-treatment assembly for a vehicle;
- Figure 2 is a view at a larger scale of the retention device indicated by the arrow II in Figure 1;
- Figure 3 is a cross section taken along the line III-III of Figure 1;
- Figure 4 is a cross section taken along the line IV-IV of Figure 3; and
- Figure 5 is a perspective view illustrating the retention device of Figures 2 to 4 used for controlling an oscillating door.

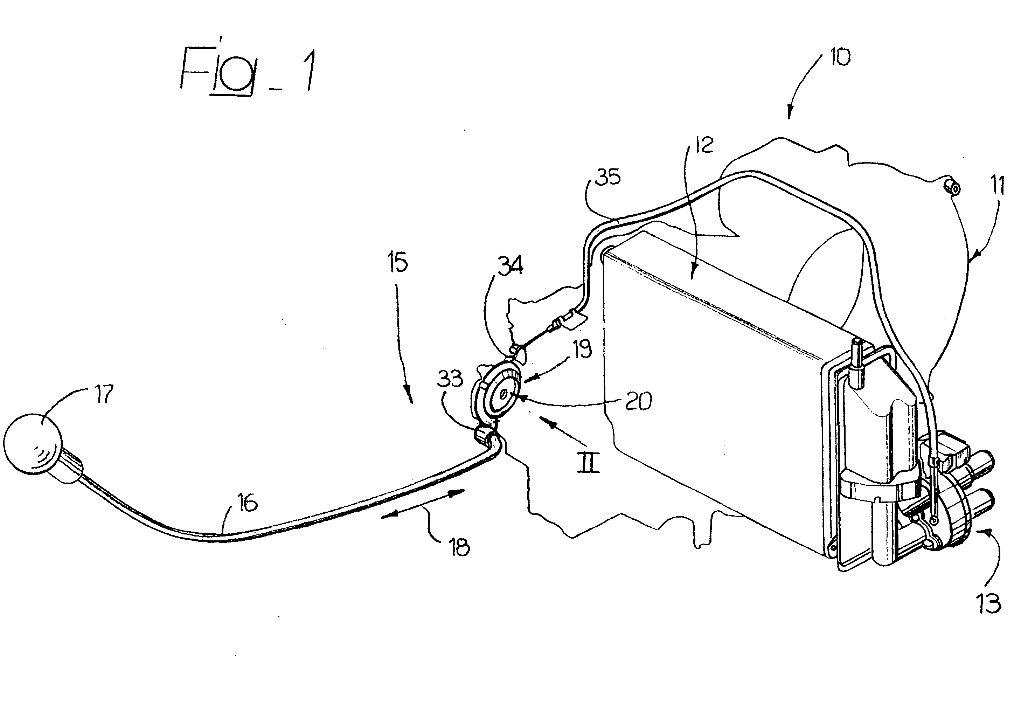

With reference to Figure 1, the number 10 designates an assembly for treating a flow of air for a vehicle. The assembly 10 comprises a supporting structure made of plastic material 11 forming a casing, in which there are defined chambers and ducts for treatment, mixing and distribution of a flow of air that is to be sent into the passenger compartment of a vehicle (not illustrated). The supporting structure 11 carries at least one heat exchanger 12 for treatment of the flow of air. In particular, the heat exchanger 12 illustrated in Figure 1 is provided for the heating of the flow of air. The heat exchanger 12 is connected to a valve 13 for regulating the rate of a flow of hot water that traverses the heat exchanger 12.

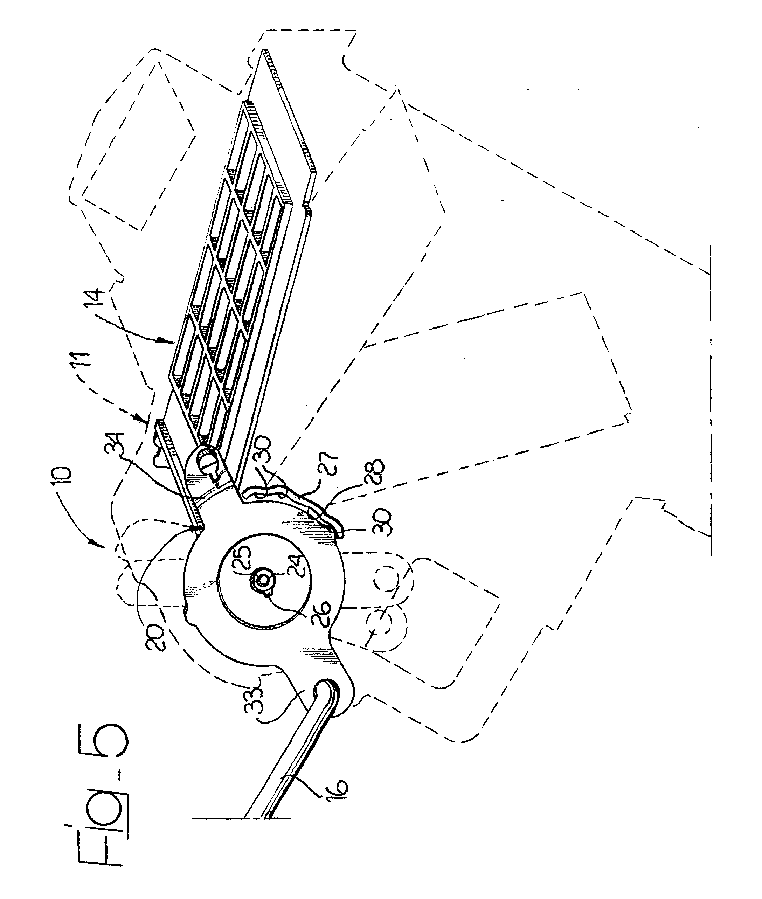

The assembly 10 comprises means for controlling the flow of air, which are designed to regulate the temperature of the flow of air and/or the distribution, mixing and air intake of the flow. The figures show two examples of the control means for controlling the flow of air. In the example illustrated in Figure 1, the control means comprise the valve 13, which enables regulation of the temperature of the flow of air by varying the rate of the flow of hot water that traverses the heat exchanger 12. In the example illustrated in Figure 5, the means for controlling the flow of air comprise an oscillating door 14, which can control air-flow distribution, the mixing of the flow, or the air intake of the assembly (intake from outside or recirculating air).

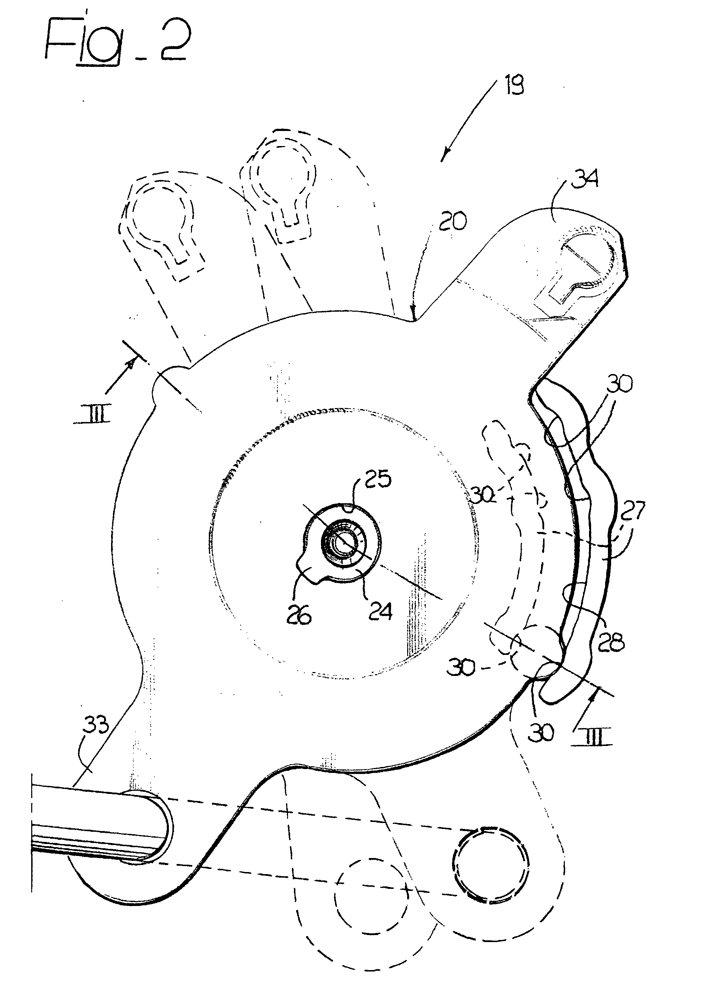

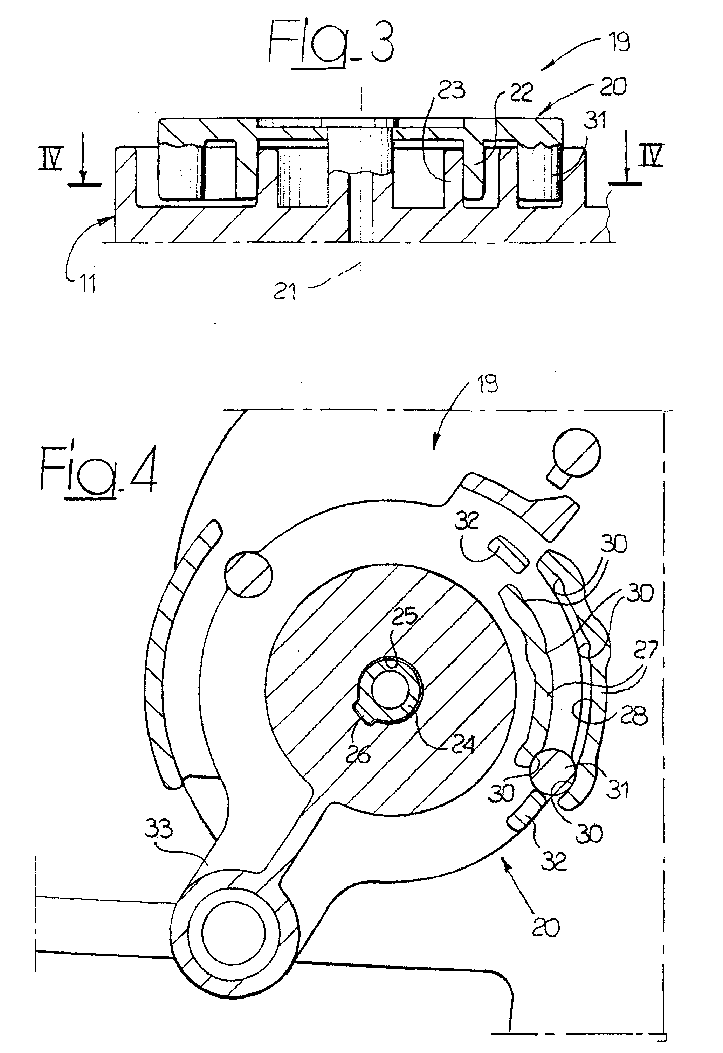

With reference to Figure 1, the valve 13 is controlled by a transmission system 15 including a tie rod 16, which carries at its end an actuating knob 17 located in the passenger compartment of the vehicle, by means of which the user can move the tie rod in the direction indicated by the double-headed arrow 18. The transmission system 15 comprises a retention device 19, which is illustrated in greater detail in Figures 2, 3 and 4. The retention device 19 comprises a rotatable transmission member 20, which is mounted so that it can turn about an axis designated by 21 in Figure 3. The rotatable transmission member 20 is made up of a body made of injection-moulded plastic material. In the embodiment illustrated in the figures, the rotatable transmission member 20 is mounted on the supporting structure 11.

In the example of embodiment illustrated, the rotatable transmission member 20 has a circular wall 22, which engages in a rotatable way a corresponding circular wall 23 formed integrally with the supporting structure 11. The engagement between the circular walls 22 and 23 forms a rotational guide for the rotatable transmission member 20. The retention device 19 is provided with means that constrain the rotatable transmission member 20 with respect to the supporting structure 11 in the direction of the axis of rotation 21. In the example illustrated herein, the said means of constraint comprise a portion having the shape of a pin 24 formed integrally with the supporting structure 11 and extending coaxially with respect to the axis of rotation 21. The pin-shaped portion 24 engages a hole 25 of the transmission member 20. In the example illustrated in the figures, the pin-shaped portion 24 has a radial projection 26, which engages by snap action the hole 25 so that the rotatable transmission member 20 is axially constrained with respect to the pin-shaped portion 24 but can rotate freely about the axis 21. Alternatively, a screw (not illustrated) could be used for axially constraining the rotatable transmission member 20 to the supporting structure 11. The retention device 19 comprises two arched walls 27, which define a retention groove 28 extending along a sector of a circle that is coaxial with respect to the axis of rotation 21 of the rotatable transmission member 20. The arched walls 27 are preferably formed integrally with the supporting structure 11. The groove 28 is provided with a plurality of retention notches 30, which define a plurality of angular retention positions of the rotatable transmission member 20 with respect to the stationary supporting structure 11. The rotatable transmission member 20 is provided with an engagement member having the shape of a pin 31 housed in the groove 28. The engagement member 31 is preferably made integrally with the rotatable transmission member 20 and has the shape of a pin with axis parallel to the axis of rotation 21. As illustrated in Figure 4, the retention device 19 may also be provided with a pair of end-of-travel projections 32, which delimit the groove 28.

The rotatable transmission member 20 has two radial appendages 33, 34 provided with respective holes. The appendage 33 is connected to the control tie rod 16, and the appendage 34 is connected to the end of a flexible transmission cable of a Bowden type, the other end of which is connected to the tap 13. In the variant illustrated in Figure 5, the radial appendage 34 is connected to the oscillating door 14.

The arched walls 27, which form the groove 28, have a certain degree of elasticity so as to be able to receive the pin 31 with a certain degree of interference, in such a way that the rotatable transmission member 20 is withheld in a stable position when the pin 31 comes to occupy a position corresponding to the retention notches 30. To make the transmission member 20 rotate about its own axis of rotation 21, it is necessary to apply, by means of the tie rod 16, a pre-set force necessary for causing the retention member 31 to come out of the condition of engagement with a pair of notches 30. When the pin-shaped engagement member 31 encounters the subsequent pair of retention notches 30, it snaps into engagement with said notches, indicating to the user that a new position of pre-set adjustment has been reached. The variation of angular position of the rotatable transmission member 20 causes a variation in the degree of opening of the tap 13 or a variation in the angular position of the door 14.

The retention device 19 according to the present invention consists of a single component, i.e., the rotatable transmission member 20, which co-operates with walls made monolithically with the supporting structure 11. The assembly of this component is particularly simple and rapid since it does not involve any installation of balls, springs or other elements for performing the action of retention on the rotatable transmission member 20. The rotatable transmission member 20 may be mounted on the supporting structure 11 of the assembly 10 as illustrated in the figures. Alternatively, the rotatable transmission member 20 could be integrated in a rotatable control knob set on the control panel of the vehicle.

The retention device 19 may be used in any transmission system associated to control means for controlling the flow of air of an air-treatment assembly for a vehicle. In particular, the retention device 19 may be used for remote control of the means that control the temperature of the flow of air or else on the transmission systems that carry out remote control of the position of the doors for distribution or mixing of the flow of air, or on the transmission system which controls the air intake of the assembly (intaken from outside or recirculating air).

## Claims

1. An air-flow-treatment assembly for a vehicle, comprising:
- a supporting structure (11) carrying at least one heat exchanger (12) for treatment of a flow of air;
- air flow control means (13, 14) for controlling the temperature and/or the distribution and/or mixing and/or air intake of the flow of air;
- at least one transmission system (15) comprising a retention device (19) for withholding said air flow control (13, 14) in a plurality of stable positions,
wherein said retention device (19) comprises:
- a rotatable transmission member (20);
- at least one pair of walls (27) forming an arched groove (28) that is concentric with respect to the axis of rotation (21) of the rotatable transmission member (20); said walls (27) being provided with a plurality of retention notches (30) defining positions of stable engagement of said rotatable transmission member (20); and
- at least one engagement member (31), fixed to the rotatable transmission member (20) and mobile within said arched groove (28);
**characterized in that** said walls are elastically deformable and receive the engagement member (31) with interference, so that the rotatable transmission member (20) is withheld in a stable position when the engagement member (31) occupies a position in correspondence with said retention notches (30).

2. The assembly according to Claim 1 **characterized in that** the rotatable transmission member (20) comprises a pair of radial appendages (33, 34), one first one of which (33) is connected to a control tie rod, which can be operated manually (16).

3. The assembly according to Claim 2, **characterized in that** the second of said radial appendages (34) is connected to a flexible transmission cable (35).

4. The assembly according to Claim 2, **characterized in that** the second of said radial appendages (34) is connected to an oscillating door (14).

5. The assembly according to Claim 1, **characterized in that** the rotatable transmission member (20) comprises a circular wall (22), which engages, in a rotatable way, a wall of a stationary guide (23).

6. The assembly according to Claim 1, **characterized in that** it comprises means for constraint of the rotatable transmission member (20) in the direction of its own axis of rotation (21).

## Patentansprüche

1. Eine Luftstrombehandlungsanlage für ein Fahrzeug, aufweisend:
- einen Trägeraufbau (11), der mindestens einen Wärmetauscher (12) zur Behandlung eines Luftstromes trägt;
- Luftstromkontrolleinrichtungen (13, 14) zum Kontrollieren der Temperatur und/oder der Verteilung und/oder des Mischens und/oder des Lufteinlaufes der Luftströmung;
- mindestens ein Übertragungssystem (15), welches eine Haltevorrichtung (19) aufweist zum Halten der Luftströmungskontrolle (13, 14) in einer Vielzahl von stabilen Positionen,
wobei die Haltevorrichtung aufweist:
- ein drehbares Übertragungsbauteil (20);
- mindestens ein Paar von Wänden (27), welche eine gewölbte Nut (28) formen, die konzentrisch in Bezug auf die Drehachse (21) des drehbaren Übertragungsbauteils (20) ist, wobei die Wände (27) mit einer Vielzahl von Haltekerben (30) versehen sind, welche Positionen stabilen Eingriffs des drehbaren Übertragungsbauteils (20) definieren; und
- mindestens ein Eingriffsbauteil (31), das an dem drehbaren Übertragungsbauteil (20) befestigt und innerhalb der gewölbten Nut (28) beweglich ist;
**dadurch gekennzeichnet, dass** die Wände elastisch verformbar sind und das Eingriffsbauteil (31) mit gegenseitiger Beeinflussung aufnehmen, so dass das drehbare Übertragungsbauteil (20) in einer stabilen Position gehalten wird, wenn das Eingriffsbauteil (31) eine Position in Übereinstimmung mit den Haltekerben (30) einnimmt.

2. Anlage nach Anspruch 1, **dadurch gekennzeichnet, dass** das drehbare Übertragungsbauteil (20) ein Paar von radialen Ansätzen (33, 34) aufweist, wobei ein erster Ansatz (33) mit einem Kontrollverbindungsstab (16) verbunden ist, der manuell betätigt werden kann.

3. Anlage nach Anspruch 2, **dadurch gekennzeichnet, dass** der zweite radiale Ansatz (34) mit einem flexiblen Übertragungskabel (35) verbunden ist.

4. Anlage nach Anspruch 2, **dadurch gekennzeichnet, dass** der zweite radiale Ansatz (34) mit einer oszillierenden Tür (14) verbunden ist.

5. Anlage nach Anspruch 1, **dadurch gekennzeichnet, dass** das drehbare Übertragungsbauteil (20) eine kreisförmige Wand (22) aufweist, welche in einer drehbaren Weise mit einer Wand einer stationären Führung (23) in Eingriff steht.

6. Anlage nach Anspruch 1, **dadurch gekennzeichnet, dass** sie Einrichtungen aufweist zum Beschränken des drehbaren Übertragungsbauteils (20) in der Richtung ihrer eigenen Drehachse (21).

## Revendications

1. Ensemble de traitement d'un écoulement d'air pour un véhicule, comprenant:
- une structure de support (11) portant au moins un échangeur de chaleur (12) pour le traitement d'un écoulement d'air;
- des moyens (13, 14) de commande d'écoulement d'air pour commander la température et/ou la distribution et/ou le mélange et/ou l'entrée d'air de l'écoulement d'air;
- au moins un système de transmission (15) comprimant un dispositif de rétention (19) pour retenir lesdits moyens (13, 14) de commande d'écoulement d'air dans une pluralité de positions stables,
dans lequel le dispositif de retenue (19) comprend:
- un élément de transmission rotatif (20);
- au moins une paire de parois (27) formant une gorge arquée (28), qui est concentrique à l'axe de rotation (21) de l'élément de transmission rotatif (20); lesdites parois (27) étant pourvues d'une pluralité d'encoches de retenue (30) définissant des positions d'engagement stable dudit élément de transmission rotatif (20); et
- au moins un élément d'engagement (31), fixé à l'élément de transmission rotatif (20) et mobile dans ladite gorge arquée (28);
**caractérisé en ce que** lesdites parois sont déformables élastiquement et reçoivent l'élément d'engagement (31) avec interférence, de sorte que l'élément de transmission rotatif (20) est retenu dans une position stable lorsque l'élément d'engagement (31) occupe une position en correspondance avec lesdites encoches de retenue (30).

2. Ensemble selon la revendication 1, **caractérisé en ce que** l'élément de transmission rotatif (20) comprend une paire d'appendices radiaux (33, 34), dont l'un (33) est raccordé à une tige de liaison de commande, qui peut être actionnée manuellement (16).

3. Ensemble selon la revendication 2, **caractérisé en ce que** le second des deux appendices radiaux (34) est raccordé à un câble de transmission flexible (35).

4. Ensemble selon la revendication 2, **caractérisé en ce que** le second desdits appendices radiaux (34) est raccordé à une porte oscillante (14).

5. Ensemble selon la revendication 1, **caractérisé en ce que** l'élément de transmission rotatif (20) comprend une paroi circulaire (22) qui coopère, avec possibilité de rotation, avec une paroi d'un guide fixe (23).

6. Ensemble selon la revendication 1, **caractérisé en ce qu'**il comprend des moyens pour repousser à force l'élément de transmission rotatif (20) dans la direction de son propre axe de rotation (21).
